# EUROPÄISCHE PATENTANMELDUNG

(11) **EP 1 052 077 A1**
(43) Veröffentlichungstag der Anmeldung: **15.11.2000**
(21) Anmeldenummer: 00109679.1
(22) Anmeldetag: 06.05.2000
(51) Int. Cl.: B29C 45/17, B29C 45/28, B29C 45/38

(54) **Verfahren und Vorrichtung zum Spritzgiessen von Kunststoffteilen**

(30) Priorität: 14.05.1999 DE 19922301
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Es werden ein Verfahren und eine Vorrichtung zum Spritzgießen von Kunststoffteilen beschrieben. Die Vorrichtung besitzt ein Spritzgießwerkzeug (10) mit einem Formhohlraum (16), der über eine erste Öffnung (22) mit einem Angußkanal (18) zumindest zeitweise verbunden ist, wobei die beiden dabei einen verbundenen Hohlraum bildet. Nach dem Befüllen des Formhohlraumes (16) mit der Kunststoffschmelze (20) wird die Kunststoffschmelze (20) im Bereich der ersten Öffnung (22) abgetrennt. Erfindungsgemäß geschieht dies mit Hilfe eines in den verbundenen Hohlraum eingeleiteten, fluiden Mediums (60).

## Beschreibung

Die vorliegende Erfindung betrifft ein Verfahren zum Spritzgießen von Kunststoffteilen, bei dem eine Kunststoffschmelze aus einem Angußkanal über eine erste Öffnung in einen Formhohlraum eines Spritzgießwerkzeugs eingespritzt wird, wobei der Angußkanal und der Formhohlraum zumindest zeitweise einen verbundenen Hohlraum bilden, und bei dem ferner nach dem Befüllen des Formhohlraumes mit Kunststoffschmelze die Kunststoffschmelze im Bereich der ersten Öffnung abgetrennt wird.

Die Erfindung betrifft außerdem eine Vorrichtung zum Spritzgießen von Kunststoffteilen, mit einem Formhohlraum, der über eine erste Öffnung zumindest zeitweise mit einem Angußkanal in Verbindung steht und dabei gemeinsam mit dem Angußkanal einen verbundenen Hohlraum bildet, und mit Mitteln zum Abtrennen einer in den Formhohlraum eingefüllten Kunststoffschmelze im Bereich der ersten Öffnung.

Ein Verfahren und eine Vorrichtung der vorstehend genannten Art sind aus DE-A-196 17 768 bekannt.

Beim Spritzgießen von Kunststoffteilen wird eine Kunststoffschmelze, die in der Regel durch Zuführen von thermischer Energie verflüssigt wird, in den Formhohlraum eines Spritzgießwerkzeugs eingespritzt. Die Kunststoffschmelze füllt den Formhohlraum aus und paßt sich dem Formverlauf des Formhohlraums an. Nach dem Erkalten der Kunststoffschmelze behält diese ihre Form bei, so daß das derart hergestellte Kunststoffteil die durch den Formhohlraum vorgegebene Gestaltung aufweist.

Bei diesem Herstellungsverfahren besteht in der Regel der Wunsch, einen möglichst unsichtbaren oder doch zumindest optisch ansprechenden Anguß zu erreichen. Der Anguß bezeichnet dabei die Stelle an dem späteren Kunststoffteil, an der die Kunststoffschmelze in den Formhohlraum eingespritzt wird. Wie leicht nachzuvollziehen ist, muß die Kunststoffschmelze, die sich nach dem Einspritzvorgang üblicherweise zunächst noch in den Angußkanal hinein erstreckt, an dieser besagten Stelle abgetrennt werden, um das hergestellte Kunststoffteil aus dem Formhohlraum entnehmen zu können. Dieses Abtrennen kann durch Abreißen, Abschneiden oder dergleichen geschehen. Je "gewaltsamer" das Abtrennen jedoch erfolgt, desto unsauberer gestaltet sich später der Angußpunkt an dem hergestellten Kunststoffteil.

Aus der eingangs genannten Schrift sind ein Verfahren und eine Vorrichtung zum Spritzgießen von Kunststoffteilen bekannt, mit denen sich ein sehr sauberer und weitgehend unsichtbarer Anguß vor allem beim Herstellen von sogenannten Smart Cards herstellen läßt. Eine Smart Card ist eine in der Regel mit einem elektronischen Schaltkreis versehene Kunststoffkarte, die heutzutage beispielsweise als intelligente Scheckkarte im Zahlungsverkehr eingesetzt wird. Bei der bekannten Vorrichtung, die in der Fachwelt auch als "counter valve gate" bezeichnet wird, wird zum Abtrennen der Kunststoffschmelze an der Öffnung zwischen dem Angußkanal und dem Formhohlraum ein Kolben verwendet, der über die oder quer zu der Öffnung führbar ist. Mit diesem Kolben wird die noch warme und dementsprechend noch formbare Kunststoffschmelze im Bereich der Öffnung abgetrennt.

Mit dem bekannten Verfahren bzw. der bekannten Vorrichtung lassen sich qualitativ sehr hochwertige Ergebnisse erzielen. Das Verfahren und die Vorrichtung besitzen jedoch den Nachteil, daß sie stets ein im Bereich der Kunststoffschmelze mechanisch bewegtes Element, nämlich den Kolben, voraussetzen. Die Qualität des Angußes hängt dabei entscheidend davon ab, wie exakt der Kolben an die ihn umgebenden Bereiche des Werkzeugs angepaßt ist. Sie hängt insbesondere davon ab, wie sauber die Kolbenfläche, die die eingangs genannte erste Öffnung beim Abtrennen verschließt, mit der inneren Oberfläche des Formhohlraums fluchtet. Die bekannte Vorrichtung und das bekannte Verfahren werden daher in erster Linie dann verwendet, wenn der Anguß an einer Kante des späteren Kunststoffteils erfolgt. Bei einem Anguß in einer größeren, unter Umständen sogar gekrümmten Fläche des späteren Kunststoffteils ist die Anpassung des Kolbens an die ihn umgebenden Bereiche des Werkzeugs jedoch aufwendig und schwierig.

Des weiteren sind auch sogenannte Nadelverschlüsse bekannt, mit denen sich ein Anguß in der Fläche jedoch ebenfalls nur schwierig in zufriedenstellender Qualität realisieren läßt.

Es daher Aufgabe der vorliegenden Erfindung, eine Alternative zu dem Verfahren und der Vorrichtung der eingangs genannten Art anzugeben, mit der auf einfache Weise ein hochwertiger Anguß auch in der Fläche eines herzustellenden Kunststoffteils erreichbar ist.

Diese Aufgabe wird hinsichtlich des eingangs genannten Verfahrens dadurch gelöst, daß die Kunststoffschmelze mit Hilfe eines in den verbundenen Hohlraum eingeleiteten, fluiden Mediums abgetrennt wird.

Die Aufgabe wird hinsichtlich der eingangs genannten Vorrichtung dadurch gelöst, daß die genannten Mittel einen zweiten Kanal beinhalten, dessen Austrittsöffnung in den verbundenen Hohlraum mündet und durch den mindestens ein fluides Medium in den verbundenen Hohlraum einleitbar ist.

Die Bezeichnung "fluides Medium" steht dabei im Gegensatz zu einem "Solidum", wie etwa einem Kolben, d.h. sie umfaßt sowohl gasförmige wie auch flüssige Stoffe. Es ist dabei jedoch auch nicht ausgeschlossen, daß zusätzlich zu dem fluiden Medium außerdem ein Kolben oder ein ähnliches Element zum Abtrennen der Kunststoffschmelze und/oder zum Verschließen des Formhohlraums verwendet werden kann. Im Unterschied zu dem bekannten Verfahren bzw. der bekannten Vorrichtung trägt jedoch das fluide Medium wesentlich zum Abtrennen der Kunststoffschmelze bei.

Die erfindungsgemäße Lösung besitzt den Vorteil, daß ein fluides Medium sich aufgrund seiner physikalischen Eigenschaften sehr leicht und gleichmäßig auch an komplizierte Formgebungen anpassen kann. Gleichzeitig kann jedoch über ein fluides Medium trotzdem eine sehr große Kraft übertragen werden (vgl. beispielsweise hydraulische und pneumatische Steuerungen) und dementsprechend kann mit Hilfe eines fluiden Mediums auch die noch formbare Kunststoffschmelze im Bereich der ersten Öffnung verformt und abgetrennt werden. Ein fluides Medium besitzt darüber hinaus den Vorteil, daß es sich innerhalb der Kunststoffschmelze, die nach dem Einspritzen noch formbar ist, stets weitgehend symmetrisch und gleichmäßig verteilt, wodurch der Anguß beim Abtrennen entsprechend symmetrisch und gleichmäßig gestaltet wird. Des weiteren werden durch die Verwendung eines fluiden Mediums scharfe Abrißkanten, Ecken oder Grate vermieden. Insgesamt läßt sich somit durch die Verwendung eines fluiden Mediums beim Abtrennen der Kunststoffschmelze auf einfache Weise ein gleichmäßiger und damit qualitativ hochwertiger Angaß erreichen. Die zuvor genannte Aufgabe wird daher durch die vorliegende Erfindung vollständig gelöst.

In einer Ausgestaltung des erfindungsgemäßen Verfahrens wird das fluide Medium derart in den verbundenen Hohlraum eingeleitet, daß es in der Kunststoffschmelze eine Blase bildet, die sich zumindest teilweise in den Angußkanal hinein erstreckt.

Diese Maßnahme besitzt den Vorteil, daß das fluide Medium gleichzeitig auch dazu dient, den Angußkanal gegenüber dem Formhohlraum zu verschließen, so daß auch bei der Entnahme des hergestellten Kunststoffteils aus dem Formhohlraum unmittelbar keine Kunststoffschmelze aus dem Angußkanal austritt. Darüber hinaus ist eine Blase bereits von sich aus ein weitgehend symmetrisches und gleichmäßiges Gebilde, was zu einen besonders gleichmäßigen Anguß an dem herzustellenden Kunststoffteil führt.

Alternativ zu der genannten Maßnahme wäre es ebenfalls möglich, die Kunststoffschmelze im Bereich der ersten Öffnung mit Hilfe des fluiden Medium in Form eines Hochdruckstrahles abzutrennen. Demgegenüber besitzt die bevorzugte Ausgestaltung jedoch den Vorteil, daß das eingeleitete fluide Medium nicht bereits im Bereich der ersten Öffnung aus dem verbundenen Hohlraum abgeführt werden muß. Im Gegenteil dazu, das fluide Medium verbleibt in dem verbundenen Hohlraum im Bereich der ersten Öffnung als Blase, die in der Kunststoffschmelze eingebettet ist. Das Abführen des fluiden Mediums kann beispielsweise nach dem eigentlichen Spritzvorgang zeitgleich mit dem Entnehmen des hergestellten Kunststoffteiles erfolgen oder auch beim nächstfolgenden Einspritzvorgang erfolgen.

In einer bevorzugten Ausgestaltung des erfindungsgemäßen Verfahrens wird in dem Angußkanal in zeitlicher Überlappung zu dem Einleiten des fluiden Mediums ein Unterdruck erzeugt. Eine dementsprechende Ausgestaltung der erfindungsgemäßen Vorrichtung besteht darin, daß der Angußkanal mit Mitteln zum Erzeugen eines Unterdruckes verbunden ist.

Die genannte Maßnahme besitzt den Vorteil, daß hierdurch das Einleiten des fluiden Mediums in den mit der Kunststoffschmelze gefüllten verbundenen Hohlraum erleichtert wird.

Anschaulich gesprochen wird durch das Anlegen eines Unterdruckes in dem Angußkanal die darin befindliche Kunststoffschmelze zumindest ein Stück stromaufwärts, d.h. gegen die Stromrichtung, zurückgezogen. Dadurch wird Raum für das einzuleitende fluide Medium geschaffen. Darüber hinaus besitzt die Maßnahme den Vorteil, daß mit der Regelung des Unterdruckes und der Menge des eingeleiteten Mediums zwei Parameter zur Verfügung stehen, mit denen die Vorgänge beim Abtrennen der Kunststoffschmelze beeinflußt und gesteuert werden können. So kann beispielsweise der Druck, mit dem das fluide Medium in den verbundenen Hohlraum eingeleitet werden muß, bei Erzeugen eines starken Unterdruckes in dem Angußkanal verringert werden. Was die bevorzugte Ausgestaltung der Vorrichtung angeht, so sind Mittel zum Erzeugen eines Unterdruckes in einem Kanalsystem an sich hinlänglich bekannt. Derartige Mittel basieren im einfachsten Fall auf einer Vergrößerung des in dem Kanalsystem eingeschlossenen Volumens.

In einer weiteren Ausgestaltung der zuvor genannten Maßnahme wird das fluide Medium zeitgleich mit dem Anlegen des Unterdruckes in den verbundenen Hohlraum eingeleitet.

Alternativ zu dieser Maßnahme ist es denkbar, das Anlegen des Unterdruckes und das Einleiten des fluiden Mediums zu unterschiedlichen Zeitpunkten zu beginnen. Die genannte Maßnahme besitzt demgegenüber den Vorteil, daß der durch das Anlegen des Unterdruckes in dem Angußkanal frei werdende Raum sofort durch das einströmende Medium gefüllt wird, so daß die in dem Formhohlraum befindliche Kunststoffschmelze stets unter einem definierten Druck gehalten wird. Umgekehrt wird hingegen, wie bereits erläutert, das Einleiten des fluiden Mediums erleichtert, wenn in dem Angußkanal zeitgleich ein Unterdruck vorherrscht.

In einer weiteren Ausgestaltung des erfindungsgemäßen Verfahrens wird das fluide Medium um den Angußkanal herum in den verbundenen Hohlraum eingeleitet. Eine dementsprechende Ausgestaltung der erfindungsgemäßen Vorrichtung besteht darin, daß die Austrittsöffnung des zweiten Kanals sich um den Angußkanal herum erstreckt.

Diese Maßnahme besitzt den Vorteil, daß das fluide Medium symmetrisch von allen Seiten in den verbundenen Hohlraum einströmt. Hierdurch wird einerseits das Abtrennen selbst beschleunigt, während andererseits der Abtrennvorgang besonders symmetrisch verläuft. Dies wirkt sich letztendlich wiederum auf die Qualität und das Aussehen des Angußes aus.

In einer bevorzugten Ausgestaltung der erfindungsgemäßen Vorrichtung ist der zweite Kanal konzentrisch um den Angußkanal herum angeordnet.

Diese Maßnahme besitzt den Vorteil, daß der zweite Kanal sehr platzsparend in dem Spritzgießwerkzeug angeordnet werden kann.

In einer weiteren Ausgestaltung des erfindungsgemäßen Verfahrens wird das fluide Medium stromaufwärts von der ersten Öffnung in den verbundenen Hohlraum eingeleitet. Dementsprechend mündet die Austrittsöffnung des zweiten Kanals bei der erfindungsgemäßen Vorrichtung stromaufwärts von der ersten Öffnung in den verbundenen Hohlraum.

Stromaufwärts gibt dabei eine Richtung an, die entgegen der Stromrichtung der Kunststoffschmelze beim Einspritzen in den Formhohlraum gerichtet ist.

Die genannte Maßnahme besitzt den Vorteil, daß das Abtrennen der Kunststoffschmelze etwas oberhalb der ersten Öffnung erfolgt, so daß innerhalb des Angußkanals noch ein Rest an Kunststoffschmelze verbleibt, der zum sogenannten "Nachdrücken" oder "teilweisen Nachdrücken" verwendet werden kann. Ein derartiges Nachdrücken von Kunststoffschmelze ist beim Spritzgießen von Kunststoffteilen meist erforderlich, da die Kunststoffschmelze sich in dem Formhohlraum beim Abkühlen zusammenzieht und dadurch schrumpft. Eine optimale Füllung des Formhohlraumes mit Kunststoffschmelze ist somit ohne ein solches Nachdrücken nicht unbedingt gewährleistet.

In einer alternativen Ausgestaltung der zuvor genannten Maßnahme wird das fluide Medium in Höhe der ersten Öffnung oder in Stromrichtung abwärts davon in den verbundenen Hohlraum eingeleitet. Dementsprechend ist eine erfindungsgemäße Vorrichtung bei dieser Ausgestaltung dadurch gekennzeichnet, daß die Austrittsöffnung des zweiten Kanals in Höhe der ersten Öffnung oder in Stromrichtung abwärts davon in den verbundenen Hohlraum mündet.

Die genannte Maßnahme besitzt den Vorteil, daß das fluide Medium vom Ende des Angußkanals her in diesen eindringen kann. Hierdurch wird der Angußkanal vom Ende her gegenüber dem Formhohlraum verschlossen und ein Austritt von Kunststoffschmelze aus dem Angußkanal verhindert. Die Maßnahme ist besonders vorteilhaft, wenn ein Nachdrücken von Kunststoffschmelze nicht benötigt wird oder wenn das Abtrennen der Kunststoffschmelze aus anderen Gründen möglichst dicht an der ersten Öffnung erfolgen soll. In Kombination mit der ersten Ausgestaltung der Erfindung, bei der das fluide Medium derart in den verbundenen Hohlraum eingeleitet wird, daß es eine Blase bildet, besitzt die genannte Maßnahme den Vorteil, daß sich an dem hergestellten Kunststoffteil im Bereich des Angusses ein besonders gleichmäßiger, je nach Ausbildung der Blase unter Umständen etwas vertiefter Abschluß bildet.

In einer weiteren Ausgestaltung des erfindungsgemäßen Verfahrens wird das fluide Medium durch einen zweiten Kanal eingeleitet, dessen Austrittsöffnung beim Einspritzen der Kunststoffschmelze in den Formhohlraum mit einem Verschlußmittel verschlossen wird. Eine dementsprechende erfindungsgemäße Vorrichtung ist dadurch gekennzeichnet, daß die Austrittsöffnung des zweiten Kanals mit einem Verschlußmittel versehen ist.

Die genannte Maßnahme besitzt den Vorteil, daß hierdurch ein Eindringen von Kunststoffschmelze beim Einspritzen in den zweiten Kanal verhindert wird. Dementsprechend wird auch eine Verstopfung des zweiten Kanals, der zum Einleiten des fluiden Mediums dient, vermieden.

In einer bevorzugten Ausgestaltung der erfindungsgemäßen Vorrichtung ist das Verschlußmittel eine bewegliche Lippe, die beim Einspritzen von Kunststoffschmelze in den Formhohlraum von der Kunststoffschmelze gegen die Austrittsöffnung gedrückt wird.

Diese Maßnahme besitzt den Vorteil, daß hierbei keine separate Steuerung für das Verschlußmittel benötigt wird. Hierdurch wird der Aufwand bei der Konstruktion und beim Betrieb der Vorrichtung verringert.

In einer alternativen, jedoch ebenfalls bevorzugten Ausgestaltung der zuvor genannten Maßnahme ist der Öffnungsdurchmesser der Austrittsöffnung kleiner als 0,1 mm.

Diese Maßnahme besitzt den Vorteil, daß auf ein Verschlußmittel verzichtet werden kann, ohne daß der zweite Kanal verstopfen kann, da in diesem Fall aufgrund der Größe der Austrittsöffnung keine Kunststoffschmelze eindringen kann.

In einer weiteren Ausgestaltung des erfindungsgemäßen Verfahrens wird das fluide Medium beim jeweils nächstfolgenden Einspritzen der Kunststoffschmelze in den Formhohlraum durch eine zweite Öffnung aus dem verbundenen Hohlraum gedrückt. Dementsprechend weist bei einer Vorrichtung nach dieser Ausgestaltung der verbundene Hohlraum zumindest eine zweite Öffnung auf, durch die das fluide Medium aus dem verbundenen Hohlraum entfernbar ist.

Die genannte Maßnahme besitzt den Vorteil, daß das fluide Medium ohne besonderen zusätzlichen Aufwand aus dem Formhohlraum entfernt wird. So kann insbesondere auf eine Verwendung von Pumpen oder ähnlichem verzichtet werden.

In einer bevorzugten Ausgestaltung der zuvor genannten Maßnahme ist die zweite Öffnung bei der erfindungsgemäßen Vorrichtung am in Stromrichtung abwärts gelegenen Ende des Formhohlraumes angeordnet.

Diese Maßnahme besitzt den Vorteil, daß das fluide Medium des vorhergehenden Einspritzzyklus besonders effektiv durch die einströmende Kunststoffschmelze des aktuellen Einspritzvorgangs aus dem Formhohlraum herausgedrückt wird.

In einer weiteren Ausgestaltung der erfindungsgemäßen Vorrichtung ist der Öffnungsdurchmesser der zweiten Öffnung kleiner als 0,1 mm.

Diese Maßnahme besitzt den Vorteil, daß auf zusätzliche Verschlußelemente bei der zweiten Öffnung verzichtet werden kann, ohne daß die in den Formhohlraum einströmende Kunststoffschmelze durch die zweite Öffnung entweichen kann.

In einer weiteren Ausgestaltung des erfindungsgemäßen Verfahrens wird als fluides Medium mindestens ein Gas, insbesondere Luft, in den verbundenen Hohlraum eingeleitet.

Diese Maßnahme besitzt den Vorteil, daß das fluide Medium zumindest zum Teil bereits von sich aus beim Öffnen des Formhohlraumes und dem Entnehmen des hergestellten Kunststoffteils entweicht. Darüber hinaus ist die Verwendung eines Gases und insbesondere die Verwendung von Luft besonders kostengünstig und einfach.

In einer alternativen Ausgestaltung des erfindungsgemäßen Verfahrens wird als fluides Medium eine Flüssigkeit, insbesondere Wasser in den verbundenen Hohlraum eingeleitet.

Diese Maßnahme besitzt den Vorteil, daß die Verwendung von Wasser ebenfalls sehr kostengünstig und einfach ist. Hinzu kommt, daß Wasser in der Regel aufgrund der hohen Temperaturen der Kunststoffschmelze schlagartig verdampft, so daß sich letztlich wiederum eine Gasblase mit den damit verbundenen Vorteilen bildet. Darüber hinaus wird der Umgebung des Angusses jedoch durch die Verdampfung Wärme entzogen, wodurch ein "Abfrieren" des Angusses und eine Kühlung in diesem Bereich gefördert werden. Dieser Effekt kann noch durch eine entsprechend ausgewählte Temperatur des eingeleiteten Wassers bzw. allgemeiner des eingeleiteten Mediums unterstützt werden. Es kann jedoch auch eine andere Flüssigkeit als Wasser verwendet werden, insbesondere, wenn sie schnell verdampfen kann.

In einer weiteren Ausgestaltung der Erfindung wird das fluide Medium mit wechselnden Temperaturen in den Formhohlraum eingeleitet.

Diese Maßnahme hat den Vorteil, daß das Einleiten des fluiden Mediums sowohl zeitlich wie auch räumlich im Hinblick auf ein optimales Abtrennen der Kunststoffschmelze variiert werden kann. Bevorzugt wird zunächst ein heißes Medium, d.h. ein Medium mit hoher bis sehr hoher Temperatur, in den Formhohlraum eingeleitet, um die Kunststoffschmelze noch weiter zu verflüssigen. Anschließend wird ein kaltes Medium eingeleitet, um ein Abkühlen der Kunststoffschmelze nach dem Abtrennen zu beschleunigen.

In einer weiteren Ausgestaltung werden verschiedene fluide Medien in den Formhohlraum eingeleitet. Entsprechend können mehrere zweite Kanäle bei der erfindungsgemäßen Vorrichtung vorhanden sein.

Diese Maßnahme besitzt den Vorteil, daß unterschiedliche Eigenschaften verschiedener Medien optimal kombiniert werden können.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Ausschnitt aus einem Spritzgießwerkzeug einer erfindungsgemäßen Kunststoff-Spritzgießmaschine in einer Querschnittsansicht, und zwar in einer Momentaufnahme beim Einspritzen der Kunststoffschmelze in den Formhohlraum;
- Fig. 2: das Spritzgießwerkzeug aus Fig. 1 während des Abtrennens der Kunststoffschmelze; und
- Fig. 3: ein zweites Ausführungsbeispiel eines Spritzgießwerkzeugs einer erfindungsgemäßen Kunststoff-Spritzgießmaschine in einer Ansicht entsprechend Fig. 1 und 2.

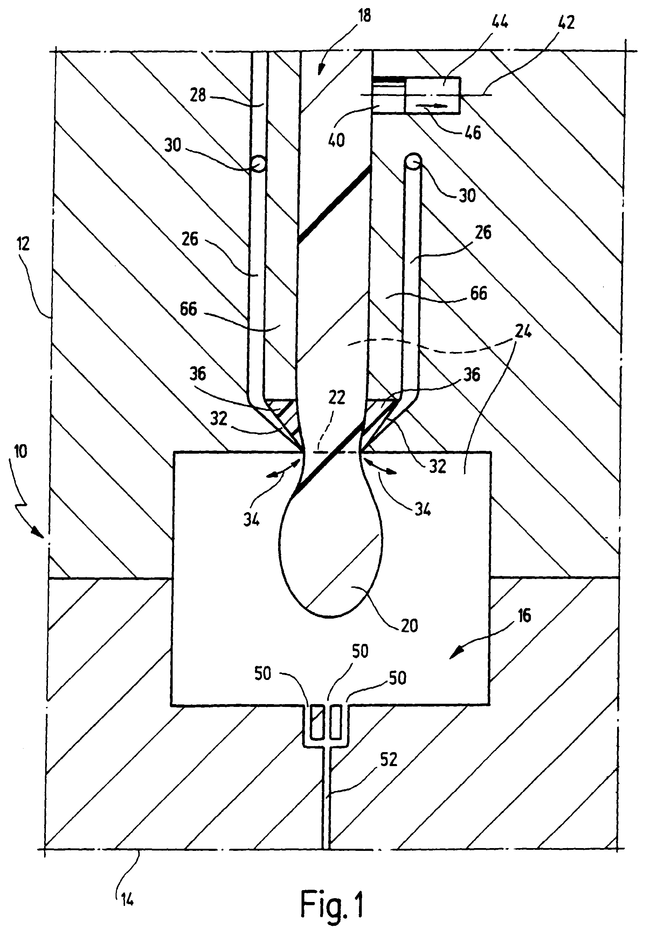

In Figur 1 ist ein Ausschnitt eines Spritzgießwerkzeugs einer erfindungsgemäßen Kunststoff-Spritzgießmaschine in seiner Gesamtheit mit der Bezugsziffer 10 bezeichnet.

Das Spritzgießwerkzeug 10 besteht aus zumindest 2 Werkzeughälften 12 und 14, die in dem dargestellten, aneinanderliegenden Zustand einen Formhohlraum 16 zwischen sich einschließen. Die Erfindung ist jedoch nicht allein darauf beschränkt und bezieht sich ebenso auf Spritzgießwerkzeuge, die mehrere Formhohlräume aufweisen und/oder aus mehreren Werkzeug-"hälften" bestehen.

In der Werkzeughälfte 12 ist ein Angußkanal 18 angeordnet, der an eine hier nicht näher dargestellte und an sich bekannte Einheit zur Aufbereitung der Kunststoffschmelze 20 angeschlossen ist. Eine derartige Einheit ist in der Regel ein Schneckenplastifizierzylinder.

Die Kunststoffschmelze 20 wird in dem Schneckenplastifizierzylinder aufbereitet und sodann über den Angußkanal 18 und eine erste Öffnung 22 in den Formhohlraum 16 eingespritzt. Zumindest während dieses Einspritzvorgangs bilden der Angußkanal 18 und der Formhohlraum 16 einen verbundenen Hohlraum 24.

Gemäß dem hier dargestellten Ausführungsbeispiel der Erfindung ist der Angußkanal 18 in seinem in Stromrichtung abwärts liegenden Bereich, und zwar in Einspritzrichtung der Kunststoffschmelze 20 gesehen, konzentrisch von einem zweiten Kanal 26 umgeben. Der zweite Kanal 26 dient gemäß der vorliegenden Erfindung zur Einleitung eines fluiden Mediums in den verbundenen Hohlraum 24, um dadurch die in den Formhohlraum 16 eingefüllte Kunststoffschmelze 20 im Bereich der ersten Öffnung 22 abzutrennen. Da gemäß einer bevorzugten Ausführungsform der Erfindung als fluides Medium Luft verwendet wird, wird der zweite Kanal 26 nachfolgend auch als Luftkanal bezeichnet. Diese Bezeichnung soll jedoch in keiner Weise eine Einschränkung der vorliegenden Erfindung in Hinblick auf das verwendete Medium bedeuten. Vielmehr können anstelle von Luft auch andere Gase oder auch Flüssigkeiten wie bevorzugt Wasser oder ein Öl verwendet werden.

Der Luftkanal 26 weist in seinem entgegen der Stromrichtung aufwärts liegenden Bereich eine Zuführung 28 auf, die sich über einen Ringkanal 30 zu dem konzentrisch um den Angußkanal 18 verlaufenden Luftkanal 26 aufweitet. Auch diese Ausführung ist hier jedoch nur beispielhaft zu verstehen und schließt andere konstruktive Lösungen zur Speisung des Luftkanals 26 nicht aus.

An seinem in Stromrichtung abwärts gelegenen Ende besitzt der Luftkanal 26 eine konzentrisch zu der ersten Öffnung 22 gelegene Austrittsöffnung 32. Die Austrittsöffnung 32 befindet sich dabei in diesem Beispiel in Höhe der ersten Öffnung 22 und ist von dieser durch eine in Pfeilrichtung 34 bewegliche, ringförmige Lippe 36 getrennt. Die Lippe 36 dient als Verschlußmittel für den Luftkanal 26, da sie durch die in den Formhohlraum 16 einströmende Kunststoffschmelze 20 auseinander gedrückt wird und dabei die Austrittsöffnung 32 des Luftkanals 26 abdeckt. In dem hier dargestellten Ausführungsbeispiel ist die Lippe 36 aus einem entsprechend elastischen Material hergestellt. Alternativ kann die Lippe 36 jedoch auch aus an sich festen, beispielsweise lamellenartig zueinander angeordneten Elementen bestehen.

In einer weiteren Alternative ist der Öffnungsdurchmesser der Austrittsöffnungen 32 kleiner als 0,1 mm gewählt, wodurch auf ein Verschlußmittel wie die Lippe 36 verzichtet werden kann.

Mit der Bezugsziffer 40 ist in Fig. 1 ein Kolben bezeichnet, der über ein hier nicht näher dargestelltes Antriebsmittel 42 bewegbar ist. Der Kolben 40 läuft in einem Zylinder 44, der mit dem Angußkanal 18 in Verbindung steht. In der in Figur 1 gezeigten Momentaufnahme beim Einspritzen der Kunststoffschmelze 20 in den Formhohlraum 16 befindet sich der Kolben 40 vorzugsweise in einer ersten Betriebsposition, in der seine Stirnfläche bündig mit der Seitenfläche des Angußkanals 18 abschließt. In dieser ersten Betriebsposition verschließt der Kolben 40 den Zylinder 44, so daß keinerlei Kunststoffschmelze 20 aus dem Angußkanal 18 in den Zylinder 44 gelangen kann.

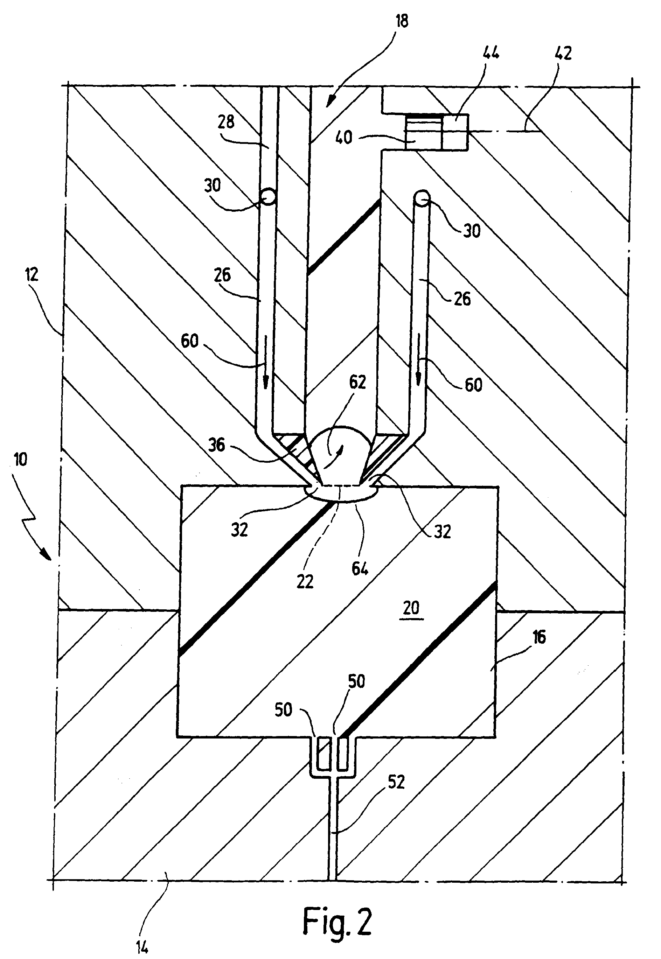

In einer nachfolgend erläuterten zweiten Betriebsposition (siehe Figur 2) ist der Kolben 40 demgegenüber in Richtung des Pfeiles 46 verschoben, wodurch das Volumen in dem Angußkanal 18 vergrößert wird. Hierdurch kann in dem Angußkanal 18 bzw. in dem verbundenen Hohlraum 24, bestehend aus dem Formhohlraum 16 und dem Angußkanal 18, ein Unterdruck erzeugt werden, der gemäß einer bevorzugten Ausführungsform des erfindungsgemäßen Verfahrens verwendet wird, um das Abtrennen der Kunststoffschmelze 20 im Bereich der ersten Öffnung 22 zu unterstützen. Die Kolben-Zylinderanordnung 40,44 stellt somit ein Mittel zum Erzeugen eines Unterdruckes in dem verbundenen Hohlraum 24 dar. Dieses Mittel ist wiederum in der hier gezeigten Art und Weise beispielhaft zu verstehen und schließt andere konstruktive Lösungen, wie etwa einen Schneckenrückzug, nicht aus.

An dem in Stromrichtung abwärts gelegenen Ende des Formhohlraumes 16 befinden sich zweite Öffnungen oder Bohrungen 50, die sich zu einem Auslaßkanal 52 verbinden. Durch die Bohrungen 50 sowie den Auslaßkanal 52 kann das zum Abtrennen der Kunststoffschmelze 20 verwendete fluide Medium beim nächstfolgenden Einspritzvorgang aus dem Formhohlraum 16 heraus gedrückt werden. Dabei ist hier anzumerken, daß der Maßstab in Figur 1 nicht die wahren Größenverhältnisse, vor allem in bezug auf die Bohrungen 50 wiedergibt. Tatsächlich wird der Durchmesser der Bohrungen 50 nur einige Hundertstel Millimeter betragen, also kleiner als 0,1 mm sein, so daß ein Austritt von Kunststoffschmelze 20 durch die Bohrungen 50 verhindert ist. Alternativ zu einer derartigen Ausführung können die Bohrungen 50 auch mit einem Verschluß- oder Ventilelement versehen sein, um einen Austritt von Kunststoffschmelze 20 an dieser Stelle zu verhindern.

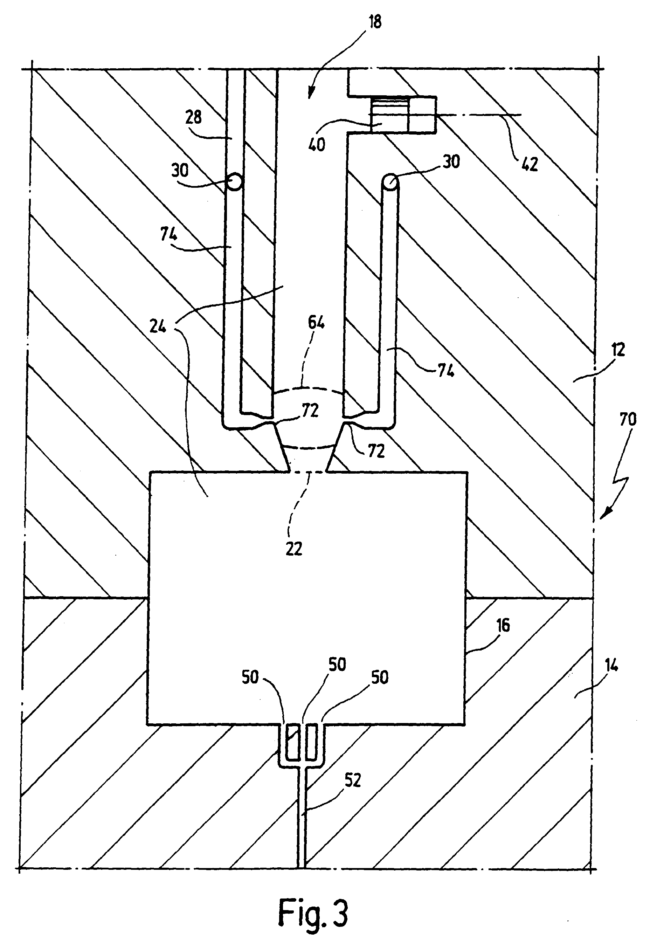

Bei der nun nachfolgenden Beschreibung der Figuren 2 und 3 werden für jeweils gleiche Elemente gleiche Bezugszeichen verwendet.

In der in Figur 2 dargestellten Momentaufnahme der zuvor beschriebenen Vorrichtung ist der Formhohlraum 16 des Spritzgießwerkzeugs 10 vollständig mit Kunststoffschmelze 20 gefüllt. Dabei geht es in dieser Momentaufnahme des erfindungsgemäßen Verfahrens darum, die in dem Formhohlraum 16 befindliche Kunststoffschmelze von der noch im Angußkanal 18 befindlichen Kunststoffschmelze zu trennen, um eine Entnahme des geformten Kunststoffteiles aus dem Formhohlraum 16 zu ermöglichen. Letzteres kann im einfachsten Fall dadurch geschehen, daß der Formhohlraum 16 durch Auseinanderfahren der beiden Werkzeughälften 12 und 14 geöffnet wird, wobei dann das hergestellte Kunststoffteil aus dem Formhohlraum 16 herausfällt. Es ist jedoch im Stand der Technik ebenfalls bekannt, daß ein sogenanntes Handlinggerät zur Entnahme des hergestellten Kunststoffteils zwischen die geöffneten Werkzeughälften 12 und 14 einfährt und das hergestellte Kunststoffteil noch innerhalb des Formhohlraumes 16 aufnimmt.

Im vorliegenden Ausführungsbeispiel des erfindungsgemäßens Verfahrens wird zum Abtrennen ein fluides Medium, bevorzugt Luft oder Wasser, in Richtung der Pfeile 60 durch den Luftkanal 26 und dessen Austrittsöffnung 32 in den Bereich der ersten Öffnung 22 eingeleitet. Wie in Figur 2 dargestellt, wird dabei die Lippe 36 in Richtung des Pfeils 62 bewegt und damit die Austrittsöffnung 32 geöffnet. Gemäß einer bevorzugten Ausführungsform des Verfahrens wird dabei der Kolben 40 von seiner ersten, in Figur 1 dargestellten Betriebsposition in seine zweite, in Figur 2 dargestellte Betriebsposition verschoben. Hierdurch wird in dem Angußkanal 18 ein Unterdruck erzeugt. Dies wiederum hat zur Folge, daß die in dem Angußkanal 18 bzw. in dem verbundenen Hohlraum 24 befindliche Kunststoffschmelze 20 zumindest ansatzweise gegen die Stromrichtung aufwärts, d.h. also entgegen der Einspritzrichtung zurückgezogen wird. Der hierdurch frei werdende Raum innerhalb des verbundenen Hohlraums 24 wird dabei durch die eingeleitete Luft aufgefüllt. Umgekehrt verdrängt die durch den Luftkanal 26 eingeleitete Luft die Kunststoffschmelze 20 im Bereich der ersten Öffnung 22. Infolge dessen bildet sich im Bereich der ersten Öffnung 22 eine Luftblase bzw. allgemeiner gesprochen eine Blase von fluidem Medium, die in der sie umgebenden Kunststoffschmelze 20 eingebettet ist. Wie leicht nachzuvollziehen ist, hängt die Größe der Blase 64 von der Menge der eingeleiteten Luft sowie von den im Bereich der ersten Öffnung 22 vorherrschenden Drücken ab.

In der in Figur 2 dargestellten Momentaufnahme hat die Blase 64 eine Größe erreicht, die die erste Öffnung 22 vollständig ausfüllt, so daß die in dem Formhohlraum 16 befindliche Kunststoffschmelze 20 von der in dem Angußkanal 18 verbleibenden Kunststoffschmelze getrennt ist. Dies bedeutet, daß die in dem Formhohlraum 16 befindliche Kunststoffschmelze 20 im Bereich der ersten Öffnung 22 abgetrennt ist.

Bei der in Figur 2 dargestellten Größe der Blase 64 ist die in dem Formhohlraum 16 befindliche Kunststoffschmelze 20 im Bereich der ersten Öffnung 22 leicht eingedrückt. Dies hat bei einem hergestellten Kunststoffteil eine entsprechende Vertiefung im Bereich des Angußes zur Folge. Da die Blase 64 sich jedoch aufgrund der symmetrischen Anordnung des Luftkanals 26 und seiner Austrittsöffnung 32 innerhalb des Formhohlraumes 16 symmetrisch ausbildet, erhält die Vertiefung eine gleichmäßige, symmetrische Form. Dies stellt für viele Anwendungen einen qualitativ hinreichenden Anguß dar.

Durch eine entsprechende Auswahl der Menge und des Drucks der durch den Luftkanal 26 eingeleiteten Luft läßt sich die Größe der Blase 64 innerhalb der Kunststoffschmelze 20 beeinflussen. Daher kann die Form des Angußes bei einem hergestellten Kunststoffteil durch Regel- bzw. Steuerungsvorgänge, die von außerhalb der Kunststoff-Spritzgießmaschine zugänglich sind, eingestellt werden. Dabei ist es möglich, einen weitgehend unsichtbaren Anguß zu erreichen. Ein weiterer Steuerungsparameter ist in diesem Zusammenhang auch die Stellung des Kolbens 40, durch die nach dem Abtrennen der Kunststoffschmelze 20 im Bereich der ersten Öffnung 22 außerdem auch ein Nachdrücken der Kunststoffschmelze 20 in dem Formhohlraum 16 bewirkt werden kann.

Alternativen zu dem hier dargestellten Ausführungsbeispiel können sein, daß der Ringkanal 30 abweichend von der Darstellung der Fig. 1 und 2 unmittelbar oberhalb der Lippe 36 verläuft.

Des weiteren kann der zweite Kanal 26 aus zwei oder mehreren, voneinander getrennten und einander gegenüberliegend angeordneten Segmenten bestehen. Eine derartige Ausbildung bietet die Möglichkeit, daß durch ein Segment eingeleitete fluide Medium unmittelbar durch das gegenüberliegende Segment abzusaugen, so daß ein Querstrom von fluidem Mediums entsteht. Das Abtrennen der Kunststoffschmelze erfolgt dann anstelle oder in Ergänzung zu einer Blase mit Hilfe dieses Querstromes.

Eine weitere Abwandlung des in den Fig. 1 und 2 dargestellten Ausführungsbeispiels ist, daß die Lippe 36 oder auch der sie tragende Teil 66 der Werkzeughälfte 12 relativ zu dem verbleibenden Teil der Werkzeughälfte 12 verschiebbar ist, so daß der Öffnungsquerschnitt der Austrittsöffnung 32 veränderbar ist.

Figur 3 zeigt ein weiteres Ausführungsbeispiel eines erfindungsgemäßen Spritzgießwerkzeugs 70. Dabei ist aus Gründen der Übersichtlichkeit keine Kunststoffschmelze dargestellt.

Das Spritzgießwerkzeug 70 unterscheidet sich von dem Spritzgießwerkzeug 10 des vorhergehenden Ausführungsbeispieles im wesentlichen dadurch, daß die Austrittsöffnung 72 des zweiten Kanals 74 in diesem Fall gegen die Stromrichtung aufwärts von der ersten Öffnung 22 angeordnet ist. Wie im zuvor beschriebenen Ausführungsbeispiel erstreckt sich jedoch auch hier die Austrittsöffnung 72 um den Angußkanal 18 herum, um ein symmetrisches Einleiten von Luft bzw. eines anderen fluiden Mediums in den verbundenen Hohlraum 24 zu gewährleisten. Die Austrittsöffnung 72 ist im vorliegenden Fall im Form von einzelnen, rund um den Angußkanal 18 angeordneten Bohrungen ausgebildet, die in den konzentrisch dazu verlaufenden zweiten Kanal münden. Alternativ wäre es jedoch ebenfalls möglich, die Austrittsöffnung 72 durch einen umlaufenden schmalen Schlitz zu realisieren. Die Größe der Bohrungen der Austrittsöffnung 72 beträgt im vorliegenden Fall nur einige Hunderstel Millimeter, um ein Eintreten von Kunststoffschmelze in den zweiten Kanal 74 zu verhindern. Daher kann bei diesem Ausführungsbeispiel auf Verschlußmittel in Form einer Lippe 36 oder Ähnlichem verzichtet werden. Alternativ hierzu ist es jedoch auch möglich, die Austrittsöffnungen 72 mit einer Lippe 36 zu versehen. Dies ist besonders dann bevorzugt, wenn der Durchmesser der Austrittsöffnungen 72 größer als zuvor genannt gewählt wird.

Im Unterschied zum vorhergehenden Ausführungsbeispiel bildet sich im vorliegenden Fall die Blase 64, deren Position hier nur in Strichlinien angedeutet ist, vollständig innerhalb des Angußkanals 18. Dies hat zur Folge, daß unterhalb der Blase 64, jedoch noch innerhalb des Angußkanals 18 ein Bereich verbleibt, der bei vollständig gefülltem Hohlraum 24 ebenfalls mit Kunststoffschmelze 20 gefüllt ist. Diese in Bezug auf den Formhohlraum 16 überschüssige Menge an Kunststoffschmelze wird bevorzugt zum Nachdrücken oder teilweise Nachdrücken beim Abkühlen der Kunststoffschmelze 20 verwendet. Die zum Nachdrücken erforderliche Kraft wird dabei bevorzugt mit Hilfe des Kolbens 40 oder mit Hilfe der hier nicht gezeigten Schnecke im Plastifizierzylinder aufgebracht.

Durch geeignete Auswahl der Betriebsparameter, insbesondere der Menge und des Drucks der durch den zweiten Kanal 74 eingeleiteten Luft, kann die Größe der Blase 64 und damit die Form des Angußes im Bereich der ersten Öffnung 22 bestimmt werden. Darüber hinaus kann der zweite Kanal 74 auch zum Erzeugen eines Unterdrucks im verbundenen Hohlraum 24 verwendet werden. Insgesamt lassen sich damit qualitativ hervorragende Ergebnisse erzielen.

## Patentansprüche

1. Verfahren zum Spritzgießen von Kunststoffteilen, bei dem eine Kunststoff schmelze (20) aus einem Angußkanal (18) über eine erste Öffnung (22) in einen Formhohlraum (16) eines Spritzgießwerkzeugs (10) eingespritzt wird, wobei der Angußkanal (18) und der Formhohlraum (16) zumindest zeitweise einen verbundenen Hohlraum (24) bilden, und bei dem ferner nach dem Befüllen des Formhohlraums (16) mit Kunststoffschmelze (20) die Kunststoffschmelze (20) im Bereich der ersten Öffnung (22) abgetrennt wird, dadurch gekennzeichnet, daß die Kunststoffschmelze (20) mit Hilfe mindestens eines in den verbundenen Hohlraum (24) eingeleiteten, fluiden Mediums (60) abgetrennt wird.

2. Verfahren nach Anspruch 1, dadurch gekennzeichnet, daß das fluide Medium (60) derart in den verbundenen Hohlraum (24) eingeleitet wird, daß es in der Kunststoffschmelze (20) eine Blase (64) bildet, die sich zumindest teilweise in den Angußkanal (18) hinein erstreckt.

3. Verfahren nach Anspruch 1 oder 2, dadurch gekennzeichnet, daß in dem Angußkanal (18) in zeitlicher Überlappung zu dem Einleiten des fluiden Mediums (60) ein Unterdruck erzeugt wird, wobei vorzugsweise das fluide Medium (60) zeitgleich mit dem Anlegen des Unterdrucks in den verbundenen Hohlraum (24) eingeleitet wird.

4. Verfahren nach einem der Ansprüche 1 bis 3, dadurch gekennzeichnet, daß das fluide Medium (60) um den Angußkanal (18) herum in den verbundenen Hohlraum (24) eingeleitet wird.

5. Verfahren nach einem der Ansprüche 1 bis 4, dadurch gekennzeichnet, daß das fluide Medium (60) stromaufwärts von der ersten Öffnung (22), in Höhe der ersten Öffnung (22) oder in Stromrichtung abwärts davon in den verbundenen Hohlraum (24) eingeleitet wird.

6. Verfahren nach einem der Ansprüche 1 bis 5, dadurch gekennzeichnet, daß das fluide Medium (60) durch einen zweiten Kanal (26; 74) eingeleitet wird, dessen Austrittsöffnung (32; 72) beim Einspritzen der Kunststoffschmelze (20) in den Formhohlraum (16) mit einem Verschlußmittel (36) verschlossen wird.

7. Verfahren nach einem der Ansprüche 1 bis 6, dadurch gekennzeichnet, daß das fluide Medium (60) beim jeweils nächstfolgenden Einspritzen der Kunststoffschmelze (20) in den Formhohlraum (16) durch eine zweite Öffnung (50) aus dem verbundenen Hohlraum (24) herausgedrückt wird.

8. Verfahren nach einem der Ansprüche 1 bis 7, dadurch gekennzeichnet, daß als fluides Medium (60) ein Gas, insbesondere Luft, oder eine Flüssigkeit, insbesondere Wasser in den verbundenen Hohlraum (24) eingeleitet wird.

9. Verfahren nach einem der Ansprüche 1 bis 8, dadurch gekennzeichnet, daß das fluide Medium mit wechselnden Temperaturen, oder daß verschiedene fluide Medien in den Formhohlraum eingeleitet werden.

10. Vorrichtung zum Spritzgießen von Kunststoffteilen, mit einem Formhohlraum (16), der über eine erste Öffnung (22) zumindest zeitweise mit einem Angußkanal (18) in Verbindung steht und dabei gemeinsam mit dem Angußkanal (18) einen verbundenen Hohlraum (24) bildet, und mit Mitteln zum Abtrennen einer in den Formhohlraum (16) eingefüllten Kunststoffschmelze (20) im Bereich der ersten Öffnung (22), dadurch gekennzeichnet, daß die genannten Mittel einen zweiten Kanal (26; 74) beinhalten, dessen Austrittsöffnung (32; 72) in den verbundenen Hohlraum (24) mündet und durch den ein fluides Medium (60) in den verbundenen Hohlraum (24) einleitbar ist.

11. Vorrichtung nach Anspruch 10, dadurch gekennzeichnet, daß der Angußkanal (18) mit Mitteln (40, 42, 44) zum Erzeugen eines Unterdrucks verbunden ist.

12. Vorrichtung nach Anspruch 10 oder 11, dadurch gekennzeichnet, daß die Austrittsöffnung (32; 72) des zweiten Kanals (26; 74) sich um den Angußkanal (18) herum erstreckt, insbesondere konzentrisch um den Angußkanal (18) herum angeordnet ist.

13. Vorrichtung nach einem der Ansprüche 10 bis 12, dadurch gekennzeichnet, daß die Austrittsöffnung (32; 72) des zweiten Kanals (26; 74) stromaufwärts von der ersten Öffnung (22), in Höhe der ersten Öffnung (22) oder in Stromrichtung abwärts davon in den verbundenen Hohlraum (24) mündet.

14. Vorrichtung nach einem der Ansprüche 10 bis 13, dadurch gekennzeichnet, daß die Austrittsöffnung (32; 72) des zweiten Kanals (26; 74) mit einem Verschlußmittel (36) versehen ist, wobei vorzugsweise das Verschlußmittel (36) eine bewegliche Lippe ist, die beim Einspritzen von Kunststoffschmelze (20) in den Formhohlraum (16) von der Kunststoffschmelze (20) gegen die Austrittsöffnung (32) gedrückt wird, und weiter vorzugsweise der Öffnungsdurchmesser der Austrittsöffnung (72) kleiner als 0,1 mm ist.

15. Vorrichtung nach einem der Ansprüche 10 bis 14, dadurch gekennzeichnet, daß der verbundene Hohlraum (24) zumindest eine zweite Öffnung (50) aufweist, durch die das fluide Medium (60) aus dem verbundenen Hohlraum (24) entfernbar ist, wobei vorzugsweise die zweite Öffnung (50) am in Stromrichtung abwärts gelegenen Ende des Formhohlraums (16) angeordnet und weiter vorzugsweise der Öffnungsdurchmesser der zweiten Öffnung (50) kleiner als 0,1 mm ist.
